# EUROPÄISCHE PATENTSCHRIFT

(11) **EP 4 095 402 B1**
(45) Veröffentlichungstag und Bekanntmachung des Hinweises auf die Patenterteilung: **06.08.2025**
(21) Anmeldenummer: 21175957.6
(22) Anmeldetag: 26.05.2021
(51) Int. Cl.: F16B 12/16, F16B 25/00

(54) **DÜBELSCHRAUBE**
DOWEL SCREW
CHEVILLE FILETÉE

(43) Veröffentlichungstag der Anmeldung: 30.11.2022
(73) Patentinhaber: Simulinvent GmbH, 5615 Fahrwangen (CH); SFS Group AG, 9435 Heerbrugg (CH)
(72) Erfinder: WETZSTEIN, René, 5615 Fahrwangen (CH)
(74) Vertreter: Troesch Scheidegger Werner AG

(56) Entgegenhaltungen:
- EP-A1- 0 060 441
- CH-A- 557 964
- RU-U1- 107 832
- US-A1- 2008 175 688

## Beschreibung

Die vorliegende Erfindung befasst sich mit einer Schraube speziell zur Eckverbindung von Holzplatten im Möbelbau.

### HINTERGRUND

Im modernen Möbelbau werden heute in hohem Masse beschichtete und furnierte Platten verwendet, die aus verpressten und verklebten Holzfasern bzw. Holzspänen mit Zuschlägen bestehen (Spanplatten, Faserplatten). Die Festigkeit dieser Holzfaserplatten ist zumeist geringer als die von Vollholz, aber für den Möbelbau ausreichend. Kritisch sind jedoch Verbindungspunkte, speziell die Eckverbindungen von Holzfaserplatten.

### DEFINITIONEN

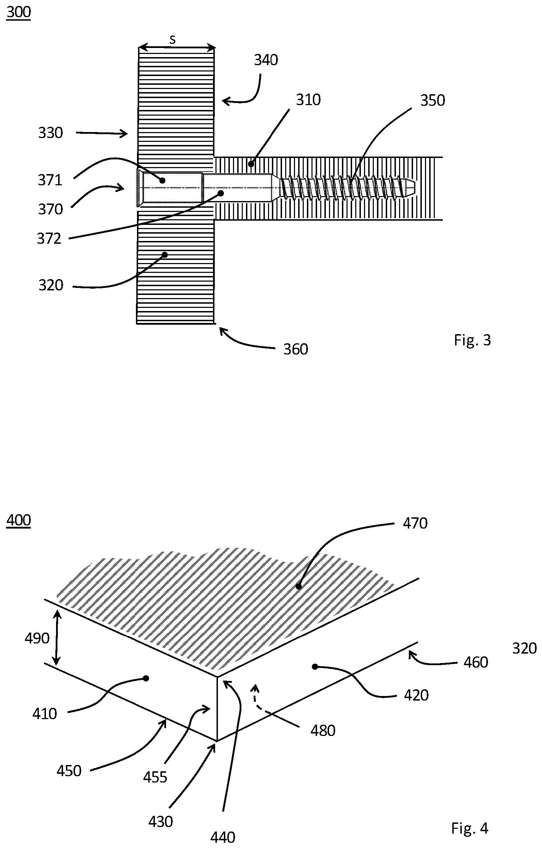

Die nachfolgenden Erläuterungen sind visualisiert in den Figuren 3 und 4, die Referenzzeichen beziehen sich auf diese schematischen Darstellungen.

Mit Platte sei, gestützt auf Figur 4, im Folgenden allgemein ein in einer Ebene ausgebreitetes Bauteil 400 gemeint, das aus steifem Material besteht. Geometrisch gesehen hat eine Platte die Form eines flachen Quaders mit 6 rechteckigen Seitenflächen (exemplarisch 410, 420, 470, 480), die alle rechtwinklig aufeinander stehen. Eine Platte weist 8 Ecken (exemplarisch 430, 440) auf, die über insgesamt 12 Kanten (exemplarisch 450, 455, 460) verbunden sind, die paarweise zueinander parallel stehen. Die zur Ausbreitungsebene parallelen Oberflächen seien als Deckflächen (470, 480) bezeichnet, sie bilden den grössten Anteil an der Mantelfläche der Platte. Die zwischen den Deckflächen an deren Kante anschliessenden 4 Verbindungsflächen seien als Seitenflächen (exemplarisch 410, 420) bezeichnet. Der Abstand der Deckflächen zueinander sei wie üblich als Dicke (490) der Platte bezeichnet.

Mit Eckverbindung (vgl. Figur 3) sei im Folgenden eine Verbindung 300 gemeint, wo zwei Platten 310, 320 mittels einer Dübelschraube 370 so miteinander verbunden werden, dass eine Seitenfläche flächig auf einer Deckfläche 340 angeordnet wird. Dies kann entlang der Kante 360 einer Deckfläche der Platte 310 erfolgen oder aber auch kantenparallel versetzt oder unter einem Winkel relativ zur Kante 360 auf der Deckfläche 340. Dabei sei die Platte, in die das Schraubengewinde 350 eingreift, im Folgenden als Stirnplatte 310 bezeichnet, die daran zu befestigende zweite Platte als Deckplatte 320. Die gezeigte Dübelschraube 370 weist einen abgestuften, zweiteiligen, gewindefreien Unterkopfabschnitt auf mit den Bereichen 371 (erster, kopfnaher Unterkopfabschnitt) und 372 (zweiter, gewindenaher Unterkopfabschnitt). Die Dicke der Deckplatte ist mit s bezeichnet.

Für den Fachmann wird, in Kenntnis der unten beschriebenen Erfindung, klar werden, dass die anhand des einfachen Quaders bzw. von rechtwinklig aufeinander treffenden Platten beschriebene Funktionalität auch in anderen, nicht an einen rechten Winkel bzw. Rechtecke gebundenen Anordnungen und Geometrien möglich sind. Die mit Platte, Quader, ... erläuterten Anwendungen stellen daher nur den üblichsten Anwendungsfall dar, dienen aber weitergehend nur der Erläuterung und nicht der Beschränkung.

### STAND DER TECHNIK

Die häufigsten Verbindungsmittel im Möbelbau sind Nägel, Schrauben und Dübel, die teilweise auch in Kombination eingesetzt werden. Dübel werden in vorgebohrte Löcher in den beiden zu verbindenden Platten eingesetzt (mit Verklebung oder ohne) und ergeben vor allem hervorragende Winkeltreue. Zudem lassen sie sich unsichtbar verbauen. Nägel sind sicher das einfachste Befestigungsmittel, lassen sich maschinell setzen, sind aber von der Auszugsfestigkeit nicht hochwertig und lassen eine beschädigungsfreie Demontage des Möbelstücks praktisch nicht zu. Bei Schrauben sind Selbstbohrschrauben bzw. Schrauben für vorgebohrte Löcher üblich. Selbstbohrschrauben in Holz sind nur mit kleinem Durchmesser und nicht allzu grossen Bohrlängen möglich, weil das ausgebohrte Material von den an die Bohrspitze anschliessenden Gewindegängen ausgefördert und/oder an die Bohrlochwand verpresst werden muss. An sich wünschenswert wäre ein grosser Schraubendurchmesser, weil dies die Haltekräfte verbessert. Der limitierende Faktor ist hier jedoch die Dicke der im Möbelbau verwendeten Holzfaserplatten. Zudem kann es bei nicht sachgerechter Anwendung, z.B. durch einen laienhaften Zusammenbau, zu irreversiblen Beschädigungen (Risse, Abplatzungen, Fehlbohrungen) am Möbel kommen.

Schrauben für vorgebohrte Löcher bieten den Vorteil der vereinfachten Montage; zudem sind Vorbohrungen in Möbelelementen im Zeitalter der CNC gesteuerten Massenherstellung von Möbelbauteilen kein technisches Problem mehr. Zwar bedeuten sie einen erheblichen Kosten- und Zeitaufwand, dafür ist die Handhabung durch den Konsumenten einfacher und sicherer. Zudem sind eine Demontage der Bauteile und ein erneuter Aufbau kein Problem.

Bekannt sind Holzschrauben für die Eckverbindung von Holzfaserplatten unter dem Namen Sped Pano. Diese auch als Dübelschrauben bezeichneten Befestiger werden in vorgebohrte bzw. vorgefräste Löcher in den Möbelbauelementen aus Holzfaserplatten eingesetzt. Sie weisen einen im Wesentlichen zylindrischen Aufbau auf mit einer stumpfen Spitze bzw. einem kurzen, gewindefreien Spitzenabschnitt und einem anschliessenden Schaftabschnitt mit Holzgewinde. Dieses Holzgewinde endet auf dem Schaft und geht über in einen konisch sich verbreiternden kurzen Abschnitt, an den sich ein kurzer gewindefreier, zylindrischer Unterkopfabschnitt anschliesst. Zumeist weist eine Sped Pano Schraube einen Senkkopf auf, der ein bündiges Abschliessen mit der Plattenoberfläche zulässt. Dabei ist die Länge des Unterkopfabschnitts so bemessen, dass er in der durchbohrten Deckplatte als Dübel wirkt, dass das Gewinde also erst in der vorgebohrten Stirnplatte eingreift. Dazu ist es bekannt, dass die Vorbohrung der Stirnplatte einen kleineren Vorbohrdurchmesser aufweist als die Durchbohrung der Deckplatte. Damit wird ein problemloses Durchstecken des Gewindeabschnittes der Sped pano Schraube durch die Deckplatte möglich. Üblicherweise werden Sped Pano Schrauben zusammen mit sogenannten Ausrichtdübeln verwendet. Das bedeutet, dass benachbart zur (Durchgangs-)Vorbohrung für die Schraube je ein Sackloch in Deckplatte und Stirnplatte vorgesehen werden. Diese werden beim Zusammenbau fluchtend zueinander mittels eines Holzdübels verbunden und richten die Bauteile so winkelpräzise aus.

Nachteilig bei den Sped Pano Schrauben ist, dass beim Setzen ausgefördertes Material aus der Vorbohrung unmittelbar in den Spalt zwischen Stirnplatte und Deckplatte geraten kann. Zudem erfordern die häufig eingesetzten Ausrichtdübel einen zusätzlichen Vorbohraufwand. Lässt man die Ausrichtdübel weg, ist die winkeltreue Ausrichtung der Platten zueinander weniger gut einstellbar, weil der spiralige Gewindezug in der Stirnplatte keinen dem Dübel vergleichbar präzise Ausrichtung erlaubt.

Sowohl aus der RU 107 832 U1 als auch aus der GB 2 072 781 A sind Schrauben mit zwei an den Schraubenkopf anschliessenden glatten Abschnitten unterschiedlichen Durchmessers bekannt. Dies um ein Verbiegen zu verhindern oder eine bessere Passung der Schraube im Bohrloch zu erreichen. Dabei entspricht der äussere Gewindedurchmesser in etwa dem Durchmesser des ersten an den Schraubenkopf anschliessenden Abschnitts, während der dazwischen liegende zweite Abschnitt einen geringeren Durchmesser aufweist..

### BESCHREIBUNG DER ERFINDUNG

Die Aufgabe der Erfindung besteht darin, das oben beschriebene Prinzip der Sped pano Dübelschrauben weiterzuentwickeln, den Montageaufwand zu verringern und zugleich die Handhabung zu verbessern. Diese Aufgabe wird durch eine Dübelschraube gemäss Anspruch 1 gelöst. Unteransprüche beschreiben weitere Ausführungsformen der Erfindung.

Eine Dübelschraube weist einen im Wesentlichen zylindrischen Aufbau der Länge L auf. Von der Spitze zum Kopf her betrachtet weist die Schraube folgende, funktionelle Abschnitte auf: Eine Spitze, die bevorzugt gewindefrei ist und kegelstumpfförmig oder zylindrisch ausgeführt ist. Mit anderen Worten, die Spitze ist nicht als Bohr- oder Verdrängerspitze ausgelegt, sondern weist eine Form auf, die die Zentrierung der Dübelschraube unterstützt. Sie wird bevorzugt eine axiale Länge aufweisen, die im Bereich des Schaftdurchmessers liegt. Die Spitze wird zudem bevorzugt einen maximalen Durchmesser aufweisen, der unter dem Durchmesser des Gewindegrundes vom gewindetragenden Schaftabschnitt liegt.

An die Spitze schliesst sich ein gewindetragender Schaftabschnitt mit einem Gewindedurchmesser d₃ (und Länge L₃) an, der in einen daran anschliessenden gewindefreien Unterkopfabschnitt übergeht. Abschliessend befindet sich ein Kopf mit einem Kraftangriff. Letzterer wird entsprechend dem Aufgabengebiet ausgewählt, z.B. als TORX, Kreuzschlitz oder einem anderen Kraftangriff nach Stand der Technik. Um eine bündige Oberfläche im verbauten Zustand zu erzielen, wird bevorzugt ein Senkkopf gewählt.

Der gewindefreie Unterkopfabschnitt weist mindestens zwei Unterabschnitte mit unterschiedlichen Durchmessern d₁, d₂ auf; einen ersten kopfnahen Unterabschnitt mit Länge L₁ und einen gewindenahen zweiten Unterabschnitt mit Länge L₂. Dabei weist der kopfnahe, erste Unterabschnitt einen grösseren Durchmesser d₁ auf als der Durchmesser d₂ des zweiten Unterabschnitts. Der Übergang zwischen den beiden Unterabschnitten erfolgt bevorzugt durch eine kurze, kegelstumpfförmige Stufe. Durch diese spezielle Auslegung mit zwei gewindefreien Unterabschnitten wird erreicht, dass die erfinderische Dübelschraube sowohl in der Deckplatte wie auch in der Stirnplatte die Funktionalität eines Dübels aufweist und der Gewindeabschnitt tiefer in der Stirnplatte versenkt ist als eine Dübelschraube nach Stand der Technik.

Bevorzugt wird die axiale Länge L₂ des zweiten Unterabschnittes unabhängig von der Länge L₁ des ersten Unterabschnittes zwischen 12 und 18mm gewählt. Bevorzugt wird die Länge L₂ im Wesentlichen 15mm betragen. Diese Angaben sind alle im Rahmen von üblichen Fertigungstoleranzen zu verstehen. Es wurde nämlich festgestellt, dass die Dübelwirkung in der Stirnplatte - und damit die gewünschte Winkeltreue - ab der beschriebenen Länge L₁ sichergestellt ist, unabhängig von der Stärke der Stirnplatte.. Durch diese Auslegung werden mehrere Vorteile zugleich erzielt:
Bei der Auslegung der Dübelschraube für verschiedene Plattenstärken müssen - für die gängigsten Plattentypen im Möbelbau - die Längen des Gewindeabschnittes L₃ und die des zweiten Unterkopfabschnittes L₂ nicht verändert werden. Nur die Länge L₁ des ersten Unterkopfabschnittes wird je nach Stärke der Deckplatte variiert. Aber auch hier muss nicht für jede Plattenstärke ein eigener Befestiger entworfen werden. Der (im Durchmesser) dünner bemessene zweite Unterabschnitt kann, sollte sein kopfnahes Ende in der Deckplatte liegen, dennoch ausreichende Eintauchtiefe in der Stirnplatte erreichen. Daraus erschliesst sich ebenfalls, dass die Länge L₁ des ersten, kopfnahen Unterkopfabschnittes so ausgelegt wird, dass er gleich oder geringfügig kürzer als die Dicke der Deckplatte ist, mit der die Dübelschraube eingesetzt werden soll. Andersherum ausgedrückt gilt für eine solche Eckverbindungsanordnung aus Stirn- und Deckplatte, dass die Stärke s der Deckplatte gleich oder geringfügig grösser sein kann als die Länge L₁ des ersten Unterkopfabschnittes. Dies erlaubt, für eine Vielzahl von Plattenstärken einige wenige Dübelschraubentypen vorzusehen. Da die Bohrung in der Stirnplatte maximal die Spitze, den Gewindeabschnitt und den zweiten Unterkopfabschnitt aufnehmen muss, genügt eine sehr geringe Anzahl verschiedener Stufenbohrer für unterschiedlichste Plattenstärken. Die stabilisierende Wirkung der beiden Unterabschnitte als Dübel in der Deckplatte und Stirnplatte bleibt erhalten, solange die oben genannte Bedingung erfüllt ist.

Weitergehend wird eine erfindungsgemässe Dübelschraube so ausgelegt, dass die Durchmesser d₁ bis d₃ so ausgelegt sind, dass gilt d₁ > d₂ > d₃. Diese Parameterwahl stellt sicher, dass sowohl die Handhabung beim Setzen der Dübelschraube wie auch die Sicherheit der Verbindung optimal gewährleistet ist.

Weiterhin wird eine Dübelschraube wie oben beschrieben vorteilhaft so ausgelegt, dass die Länge des gewindefreien Unterkopfabschnittes (also die kombinierte Länge des ersten kopfnahen und des zweiten gewindenahen Unterabschnitts) so gewählt wird, dass gilt 0.4 L < L1 + L2 < 0.55 L. Mit anderen Worten, der gewindefreie Abschnitt nimmt zwischen 40% bis 55% der gesamten Länge der Dübelschraube ein.

Das Hauptanwendungsgebiet einer erfindungsgemässen Dübelschraube ist der Möbelbau; weshalb der gewindetragende Schaftabschnitt bevorzugt ein Holzgewinde aufweist. Sollte in äquivalenter Anwendung z.B. die Stirnplatte einen Kern aus einem Hartschaum aufweisen oder einem anderen porösen, zähen oder elastischen Material, so wird der Fachmann aus dem bekannten Repertoire von Gewindearten das jeweils passende auswählen.

Das Haupteinsatzgebiet einer solchen Dübelschraube im Möbelbau ist das Verbinden zweier plattenförmiger Bauteile in einer Eckverbindung. Dabei werden die beiden Bauteile bzw. Platten so miteinander verbunden, dass eine Seitenfläche der ersten Platte flächig auf einer Deckfläche der zweiten Platte angeordnet wird. Dabei weist die erste Platte eine Durchbohrung auf, die so ausgelegt ist, dass der erste Unterabschnitt der Dübelschraube im montierten Zustand darin einen Reibsitz findet. Die zweite Platte weist ein Sackloch mit einer Stufenbohrung auf mit einem ersten Bohrlochdurchmesser, der im montierten Zustand dem zweiten Unterabschnitt (132, 372) der Dübelschraube (100, 370) einen Reibsitz erlaubt. Der für den Gewindeabschnitt vorgesehene Vorbohr-Abschnitt wird üblicherweise so ausgelegt, dass das Gewinde leicht eingedreht werden kann, aber genügend Auszugskräfte aufnehmen kann. Das Gewinde wird sich dafür in die Wandung der Vorbohrung in der Stirnplatte einschneiden.

Zusammengefasst weist die hier vorgestellte Dübelschraube folgende Vorteile bzw. Verbesserungen gegenüber dem Stand der Technik auf:
Durch eine gute Führung (Dübelwirkung der gewindefreien Schaftabschnitte) im Holz ist die Winkligkeit der Möbelkonstruktion gegeben. Die vorgestellte Dübelschraube hat für beide miteinander zu verbindende Bauteile als Dübel wirksame Abschnitte und braucht daher keine zusätzliche Dübelvorbereitung in den Bauteilen. Das wirkt sich auch positiv auf den Montageaufwand und die Zahl beizustellender Montageteile aus. Die Anzahl notwendiger Schraubverbindungen kann auf dem Niveau von SpedPano Schrauben gehalten werden und ist geringer als beim Einsatz von Selbstbohrschrauben. Durch die Durchmesserabstufung ist das Einführen der Schraube in die vorgebohrten Löcher einfach, die Ausrichtung erfolgt automatisch beim Setzen. Die Belastung auf Zug durch den Gewindeabschnitt findet tiefer im Material der Stirnplatte statt als im Stand der Technik. Auch bei nicht hoch kompakten Materialien im Plattenkern werden sehr gute Haltekräfte erreicht. Die Materialverdrängung ist minimiert, damit sinkt auch die Gefahr der Rissbildung. Die Verarbeitung ist schneller und einfacher; die Vorfertigung lässt sich CNC gesteuert mit Fräsern (Deckplatte) und Stufenbohrern (Stirnplatte) erledigen. Durch den Dübelabschnitt in der Stirnplatte wird auch besser verhindert, dass Bohrmehl in die Verbindungsfläche zwischen Stirn- und Deckplatte gelangt. Insgesamt wird dadurch auch eine mehrfach lösbare Verbindung ermöglicht.

Die Vorbohrung in der Deckplatte ist eine einfache Durchgangsbohrung mit konstanten Durchmesser, angepasst an den Durchmesser d1 der Dübelschraube. Je nach Kopftyp kann das Bohrloch angesenkt werden. In die Stirnplatte wird eine Stufenbohrung mit zwei Durchmessern eingebracht; deren Dimensionierung richtet sich nach der Dübelschraube und wird vom Fachmann entsprechend ausgelegt und vorgesehen.

Als Beispiel für eine Dübelschraube mit den Merkmalen bzw. einer Auslegung gemäss Erfindung seien folgende Parameter genannt. Alle Angaben mit der Massenfertigung zugrundeliegenden Fertigungstoleranzen:
L = 60mm, L₁= 14mm, L₂ = 15mm, L₃ = 31mm. d₁ = 6.4mm, d₂ = 6mm, d₃ = 5.5mm

Erfinderische Dübelschrauben können durch Kaltumformung aus im Stand der Technik bekannten rostfreien oder Kohlenstoffstählen hergestellt werden. Je nach Einsatzfall können zusätzlich Oberflächenbehandlungen wie Nitrieren oder Borieren bzw. Beschichtungen aus Nickel, Zink oder anderen schützenden Metallen bzw. Legierungen vorgesehen werden.

### BESCHREIBUNG DER FIGUREN

Figur 1 zeigt eine Dübelschraube gemäss Stand der Technik, bekannt als Sped Pano Eckverbinder
Figur 2 zeigt eine Seitenansicht einer erfindungsgemäßen Dübelschraube
Figur 3 zeigt ein Einsatzbeispiel mit einer Dübelschraube mit Merkmalen der Erfindung
Figur 4 zeigt, zum Zwecke der Definition, die geometrischen Merkmale einer Platte

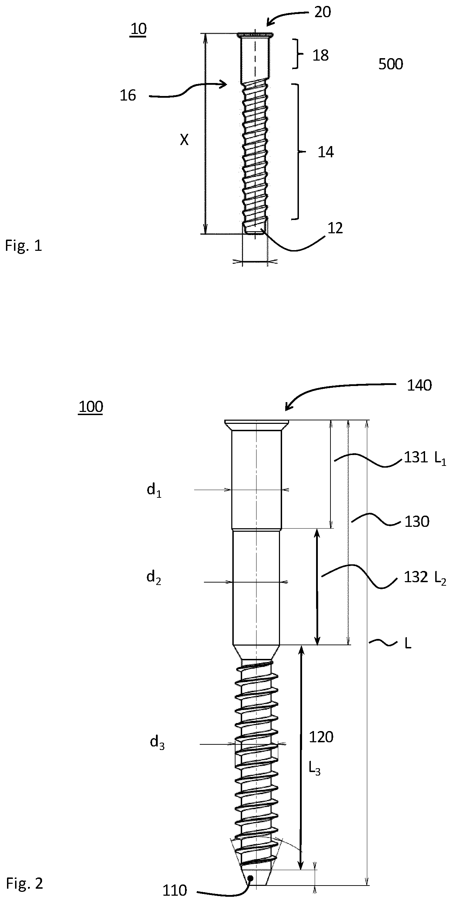

In Figur 1 wird eine bekannte Dübelschraube 10 aus dem Stand der Technik gezeigt. Diese Befestiger werden in vorgebohrte bzw. vorgefräste Löcher in den Möbelbauelementen aus Holzfaserplatten eingesetzt. Sie weisen einen im Wesentlichen zylindrischen Aufbau der Länge X auf mit einer stumpfen Spitze bzw. einem kurzen, gewindefreien Spitzenabschnitt 12 und einem anschliessenden Schaftabschnitt 14 mit Holzgewinde. Dieses Holzgewinde endet auf dem Schaft und geht über in einen konisch sich verbreiternden kurzen Abschnitt 16, an den sich ein kurzer gewindefreier zylindrischer Unterkopfabschnitt 18 anschliesst. Zumeist weist eine Sped Pano Schraube einen Senkkopf 20 auf, der ein bündiges Abschliessen mit einer Plattenoberfläche zulässt. Dabei ist die Länge des Unterkopfabschnitts 18 so bemessen, dass er in der durchbohrten Deckplatte als Dübel wirkt.

In Figur 2 wird eine bevorzugte Ausführungsform einer Dübelschraube 100 gemäss vorliegender Erfindung gezeigt. Die wesentlichen Baugruppen sind der Kopf 140, ein gewindefreier Abschnitt 130, ein gewindetragender Schaftabschnitt 120 und die Spitze 110, die hier als kurzer Kegelstumpf ohne Gewinde ausgeführt ist. Der gewindefreie Unterkopfabschnitt 130 besteht aus den Unterabschnitten 131 (erster, kopfnah) mit Länge L₁ und 132 (zweiter, gewindenah) mit Länge L₂. Die zugeordneten Durchmesser d₁ und d₂ unterscheiden sich, wobei gilt d₁ > d₂. Der gewindetragende Abschnitt 120 mit Länge L3 hat einen Durchmesser d3, der, wie üblich, über die Gewindespitzen gemessen wird.

In Figur 2 schliessen die Abschnittslängen L₁, L₂, L₃ teilweise Übergangsbereiche ein, einerseits zum Kopf bzw. zum Gewinde / Kopf hin. Diese zeichnerische Vereinfachung berührt jedoch nicht den Erfindungskern, weil sie den technischen Sinn der Merkmale nicht in Zweifel ziehen oder unklar werden lassen.

Die Figuren 3 und 4 wurden oben im Abschnitt Definitionen beschrieben und daher an dieser Stelle nicht erneut ausgeführt.

## Patentansprüche

1. Dübelschraube (100), mit einem im Wesentlichen zylindrischen Aufbau der Länge L, mit
einer Spitze (110),
einem daran anschliessenden gewindetragenden Schaftabschnitt (120) mit einem Gewindedurchmesser d₃,
einem daran anschliessenden gewindefreien Unterkopfabschnitt (130); und
einem Kopf (140) mit einem Kraftangriff,
wobei der gewindefreie Unterkopfabschnitt mindestens zwei Unterabschnitte (131, 132) mit unterschiedlichem Durchmesser d₁, d₂ aufweist, einem ersten kopfnahen Unterabschnitt (131) und einem gewindenahen zweiten Unterabschnitt (132), wobei der kopfnahe, erste Unterabschnitt (131) einen grösseren Durchmesser d₁ aufweist als der Durchmesser d₂ des zweiten Unterabschnitts (132),
**dadurch gekennzeichnet, dass**
die Durchmesser d₁ bis d₃ so ausgelegt sind, dass gilt d₁ > d₂ > d₃.

2. Dübelschraube (100) gemäss Anspruch 1, **dadurch gekennzeichnet, dass** die axiale Länge L₂ des zweiten Unterabschnittes (132) unabhängig von der Länge L₁ des ersten Unterabschnittes (131) zwischen 12 und 18mm gewählt wird.

3. Dübelschraube (100) gemäss Anspruch 1-2, **dadurch gekennzeichnet, dass** die Länge des gewindefreien Unterkopfabschnittes (130) so gewählt wird, dass gilt 0.4 L < L₁ + L₂ < 0.55 L

4. Dübelschraube (100) gemäss Anspruch 1-3, **dadurch gekennzeichnet, dass** die Spitze (110) gewindefrei ist und kegelstumpfförmig oder zylindrisch ausgeführt ist.

5. Dübelschraube (100) gemäss Anspruch 1-4, **dadurch gekennzeichnet, dass** der Kopf (140) als Senkkopf ausgelegt ist.

6. Dübelschraube (100) gemäss Anspruch 1-5, **dadurch gekennzeichnet, dass** der gewindetragenden Schaftabschnitt (120) ein Holzgewinde aufweist.

7. Dübelschraube (100) gemäss Anspruch 1-6, **dadurch gekennzeichnet, dass** die axiale Länge L₂ des zweiten Unterabschnittes (132) im Wesentlichen 15mm beträgt.

8. Verwendung einer Dübelschraube (100, 370) gemäss den Ansprüchen 1 bis 7 zum Verbinden zweier plattenförmiger Bauteile (310, 320) in einer Eckverbindung, wobei die beiden Bauteile bzw. Platten (310, 320) so miteinander verbunden werden, dass eine Seitenfläche der ersten Platte (310) flächig auf einer Deckfläche (340) der zweiten Platte (320) angeordnet wird, wobei die erste Platte (310) eine Durchbohrung aufweist, die so ausgelegt ist, dass der erste Unterabschnitt (131, 371) der Dübelschraube (100, 370) im montierten Zustand darin einen Reibsitz findet und die zweite Platte ein Sackloch mit einer Stufenbohrung aufweist mit einem ersten Bohrlochdurchmesser, der im montierten Zustand dem zweiten Unterabschnitt (132, 372) der Dübelschraube (100, 370) einen Reibsitz erlaubt.

9. Anordnung aus einer Dübelschraube (100, 370) gemäss Anspruch 1 bis 7 in einer Eckverbindung (300) aus einer Stirnplatte (310) und einer Deckplatte (320), wobei der erste Unterkopfabschnitt (131, 371) der Dübelschraube (100, 371) vollständig in einer Durchgangsbohrung in der Deckplatte (320) versenkt angeordnet ist, wobei gilt dass die Stärke s der Deckplatte (320) gleich oder grösser ist als die Länge L₁ des ersten Unterkopfabschnittes (131, 371) der Dübelschraube (100).

## Claims

1. Dowel screw (100), having a substantially cylindrical structure of length L,
with
a tip (110),
an adjoining thread-comprising shank portion (120) with a thread diameter d₃,
a threadless lower head section (130) connected thereto; and
a head (140) with a force grip,
wherein the threadless lower head section has at least two subsections (131, 132) with different diameters d₁, d₂, a first subsection (131) close to the head and a second subsection (132) close to the thread, wherein the first subsection (131) close to the head has a diameter d₁ larger than the diameter d₂ of the second subsection (132),
**characterised in that**
the diameters d₁ to d₃ are designed such that d₁ > d₂ > d₃ applies.

2. Dowel screw (100) according to claim 1, **characterised in that** the axial length L₂ of the second sub-section (132) is selected between 12 and 18 mm independently of the length L₁ of the first sub-section (131).

3. Dowel screw (100) according to claim 1-2, **characterised in that** the length of the threadless lower head section (130) is selected such that 0.4 L < L₁ + L₂ < 0.55 L applies.

4. Dowel screw (100) according to claim 1-3, **characterised in that** the tip (110) is threadless and is frustoconical or cylindrical.

5. Dowel screw (100) according to claim 1-4, **characterised in that** the head (140) is designed as a countersunk head.

6. Dowel screw (100) according to claim 1-5, **characterised in that** the thread-comprising shank section (120) has a wood-thread.

7. Dowel screw (100) according to claim 1-6, **characterised in that** the axial length L₂ of the second subsection (132) is essentially 15 mm.

8. Use of a dowel screw (100, 370) according to claims 1 to 7 for connecting two plate shaped components (310, 320) in a corner joint, wherein the two components respectively plates (310, 320) are connected to one another in such a way that a side surface of the first plate (310) is arranged flat on a top surface (340) of the second plate (320), wherein the first plate (310) has a through-hole which is designed in such a way that the first sub-section (131, 371) of the dowel screw (100, 370) finds a frictional fit therein in the assembled state, and the second plate has a blind hole with a stepped bore with a first borehole diameter which, in the assembled state, allows a frictional fit of the second sub-section (132, 372) of the dowel screw (100, 370).

9. Arrangement comprising a dowel screw (100, 370) according to claims 1 to 7 in a corner joint (300) comprising an end plate (310) and a cover plate (320), wherein the first lower head section (131, 371) of the dowel screw (100, 371) is arranged completely countersunk in a through-hole in the cover plate (320), with the thickness s of the cover plate (320) being equal to or greater than the length L₁ of the first lower head section (131, 371) of the dowel screw (100).

## Revendications

1. Vis pour cheville (100), comportant une structure essentiellement cylindrique de longueur L, avec
une pointe (110),
un segment de tige fileté (120) qui s'y raccorde et présente un diamètre de filetage d₃,
un segment de tête inférieur non fileté (130) adjacent à celui-ci ; et
une tête (140) possédant une prise de force,
dans laquelle le segment de tête inférieur non fileté présente au moins deux sous-segments (131, 132) de diamètres différents d₁, d₂, un premier sous-segment (131) proche de la tête et un second sous-segment (132) proche du filetage, le premier sous-segment (131) proche de la tête présentant un diamètre d₁ supérieur au diamètre d₂ du second sous-segment (132),
**caractérisée en ce que**
les diamètres d₁ à d₃ sont déterminés de façon telle que d₁ > d₂ > d₃.

2. Vis pour cheville (100) selon la revendication 1, **caractérisée en ce que** la longueur axiale L₂ du second sous-segment (132) est sélectionnée, indépendamment de la longueur L₁ du premier sous-segment (131), entre 12 et 18 mm.

3. Vis pour cheville (100) selon la revendication 1 à 2, **caractérisée en ce que** la longueur du segment de tête inférieur non fileté (130) est sélectionnée de façon telle que 0,4 L < L₁ + L₂ < 0,55 L.

4. Vis pour cheville (100) selon la revendication 1 à 3, **caractérisée en ce que** la pointe (110) est non filetée et est exécutée pour présenter une forme tronconique ou cylindrique.

5. Vis pour cheville (100) selon la revendication 1 à 4, **caractérisée en ce que** la tête (140) est conçue comme une tête fraisée.

6. Vis pour cheville (100) selon la revendication 1 à 5, **caractérisée en ce que** le segment de tige (120) portant le filetage présente un filetage bois.

7. Vis pour cheville (100) selon la revendication 1 à 6, **caractérisée en ce que** la longueur axiale L₂ du second sous-segment (132) est essentiellement de 15 mm.

8. Utilisation d'une vis pour cheville (100, 370) selon les revendications 1 à 7 pour relier deux éléments de construction en forme de plaque (310, 320) selon un assemblage en angle, les deux éléments de construction ou plaques (310, 320) étant reliés l'un à l'autre de façon telle qu'une surface latérale de la première plaque (310) est disposée de façon à affleurer sur une surface de couverture (340) de la seconde plaque (320), la première plaque (310) présentant un perçage traversant qui est conçu de façon telle que le premier sous-segment (131, 371) de la vis pour cheville (100, 370) se trouve, à l'état monté, à l'intérieur d'un siège ajusté, et la seconde plaque présente un trou borgne qui comporte un perçage étagé présentant un premier diamètre de perçage, et qui, à l'état monté, offre au second sous-segment (132, 372) de la vis pour cheville (100, 370) un siège ajusté.

9. Agencement d'une vis pour cheville (100, 370) selon la revendication 1 à 7 selon un assemblage en angle (300) composé d'une plaque d'extrémité (310) et d'une plaque de couverture (320), dans lequel le premier segment de tête inférieur (131, 371) de la vis pour cheville (100, 371) est disposé de façon entièrement noyée dans un perçage traversant de la plaque de couverture (320), à la condition que l'épaisseur s de la plaque de couverture (320) soit supérieure ou égale à la longueur L₁ du premier segment de tête inférieur (131, 371) de la vis pour cheville (100).
